# EUROPEAN PATENT SPECIFICATION

(11) **EP 1 844 980 B1**
(45) Date of publication and mention of the grant of the patent: **16.02.2011**
(21) Application number: 07106173.3
(22) Date of filing: 13.04.2007
(51) Int. Cl.: B60P 1/43

(54) **Platform with ramp for small or medium sized lorries for loading or unloading materials**
Plattform mit Rampe zum Be- und Entladen von Gegenständen
Plateforme avec rampe pour charger et décharger des matériaux

(30) Priority: 13.04.2006 IT PA20060016
(43) Date of publication of application: 17.10.2007
(73) Proprietor: Cambiocasa s.r.l., 90135 Palermo (IT)
(72) Inventor: Interisano, Franco, 98040 Olivarella (Messina) (IT); Ferrara, Vito, 90135 Palermo (IT); Salvia, Giorgio, 90135 Palermo (IT)
(74) Representative: Gustorf, Gerhard

(56) References cited:
- EP-A- 1 405 760
- EP-A1- 0 846 592
- WO-A-00/20252
- FR-A1- 2 778 880
- US-A- 4 540 328
- US-B1- 6 328 366

## Description

The present invention relates to a platform with ramp for small or medium sized lorries for loading or unloading materials as set forth in the preamble of claim 1.

US 6 328 366 B1 discloses a compartment formed underneath a vehicle body for storing items, e.g. a spare tire. This known compartment is in the form of a bumper drawer which may comprise a ramp housing in telescoping relationship a secondary ramp.

From WO 00/20252 an extendible ramp is known, similar to the above mentioned system in which both ramps have a predetermined width.

A further ramps is known from EPO846592.

It is an object of the invention to provide a platform of the above mentioned type fit for loading and unloading materials or for surmounting structural barriers which, thanks to a system of hidden movement, enables a single operator to easily connect the loading floor of a lorry by means of a platform in which it is installed with a plane of different or equal level.

Said problem is resolved by a platform having the characterizing features of claim 1. Further characteristics and advantages result from the dependent claims and from the following description of a possible embodiment of the invention illustrated in the drawings in which:
figure 1 is a lateral view of a lorry showing the platform in a first phase of its extraction,
figure 2 shows a second phase of extraction of the platform,
figure 3 shows the end phase of extraction of the platform,
figure 4 is a top view of the platform with ramp,
figure 5a is a section in plane V-V of the left part of figure 4 illustrating a floor profile element having a closed bottom,
figure 5b illustrates an open floor profile element,
figure 6 is a top view of a platform similar to that of figure 4 in its final phase of extraction,
figure 7 is a longitudinal section along plane VII-VII of figure 6,
figure 8 is a cross section VIII-VIII of the platform shown in figure 6,

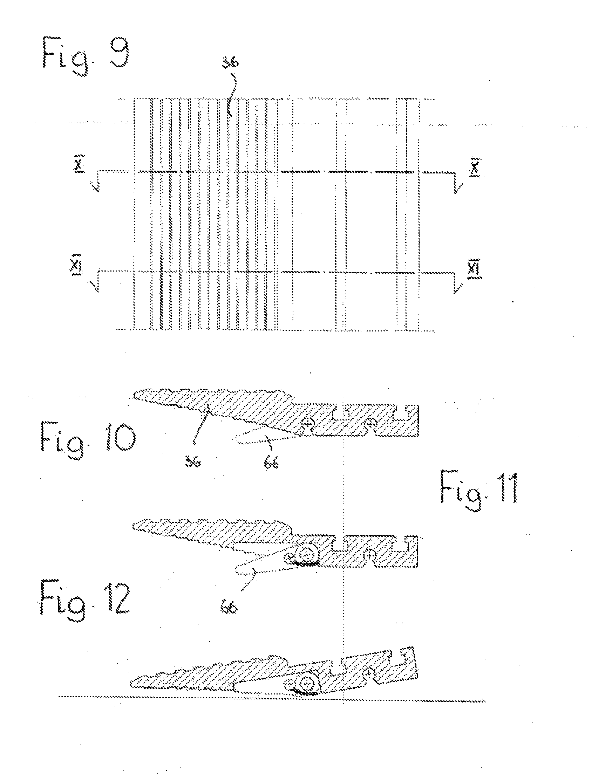

figure 9 is a schematic top view of the front crosshead of the ramp,
figure 10 shows the section X-X of figure 9,
figures 11 and 12 illustrate the sections XI-XI in two different phases of the front crosshead,
figure 13 is a top view of the lifting device,
figure 14 shows a longitudinal section of the lifting device,
figure 15 is a front view of a telescopic foot mounted in an extractable section bar,
figures 16 and 17 illustrate two different phases of said foot,
figure 18 is a lateral view of the foot turned into its external position,
figure 19 shows the foot turned back into the extractable section bar,
figure 20 illustrates in a larger scale the telescopic foot in its locked position.

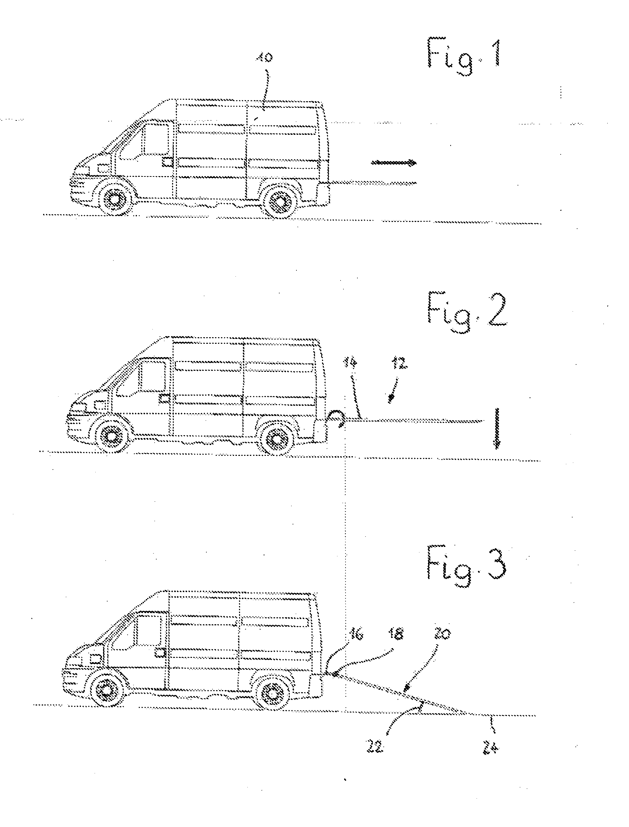

Figures 1 to 3 illustrate a lorry 10 the internal loading floor of which is provided with a platform 12 according to the invention. From figure 3 it is clear that said platform 12 comprises an extractable inner platform 14 having a horizontal part 16 which is hinged by joints 18 to an inclined part 20 provided with feet 22 for the support on the ground 24.

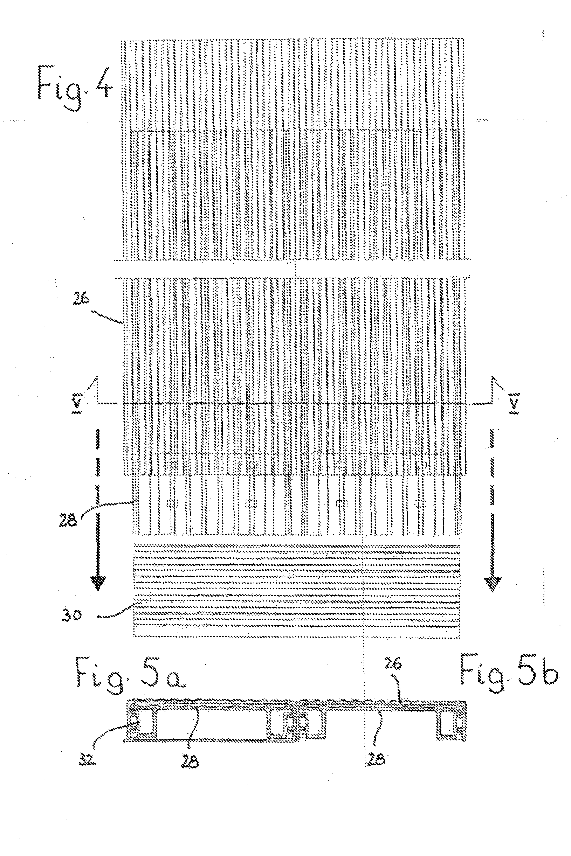

As illustrated in figures 4 and 5, the platform 12 according to the invention is made up of a series of floor profile elements 26 which are laterally interconnected such that a desired overall width is obtained which corresponds to the size and dimensions of the loading floor of the lorry 10. In each of said floor profile elements 26 an extractable and longitudinally sliding section bar 28 is housed. The series of extractable section bars 28 is interconnected by a front crosshead 30.

Thanks to the system of a hidden sliding movement, the platform according to the invention enables a single operator to easily connect the loading floor of the lorry 10 by means of said platform 12 installed within said lorry 10 with an unloading plane of different level (ground 24) or equal level.

The platform according to the invention is made up of modular parts constituted by extruded profile elements 26 and section bars 28 of aluminium. The floor profile elements 26 are shaped and interconnected such that they build the new loading floor for any lorry of whatever shape and dimension and having a small or medium capacity. Thanks to its lightness, the new platform does only slightly affect the final carrying capacity of the lorry 10.

As shown in figure 5, the loading platform is made up of series of floor profile elements 26 having a closed bottom (figure 5a) and a height of 40 mm, which are alternately coupled to a further series of floor profile elements 26 having an open bottom (figure 5b), such that the overall height of the entire loading floor is of 44 mm.

Each extractable section bar 28 (see figure 5) has a height of 32,5 mm and constitutes the loading and/or unloading platform for materials loaded in the lorry 10. The extractable section bars 28 are laterally slidable on guide shoes 32 of synthetic material which are fastened on vertical walls of said floor profile elements 26.

As already mentioned with regard to figure 3, the series of extractable section bars 28 is subdivided into an inclinable front series and a rear series (horizontal part 16) of section bars. Both series are interconnected by hinge joints 18 having horizontal axes. The front series of said extractable section bars 28 constitute, in its extracted position, the inclined platform 20.

Figure 4 shows that a transversal ramp 36 having a wedge-shaped section is fastened to the front edge of said crosshead 30.

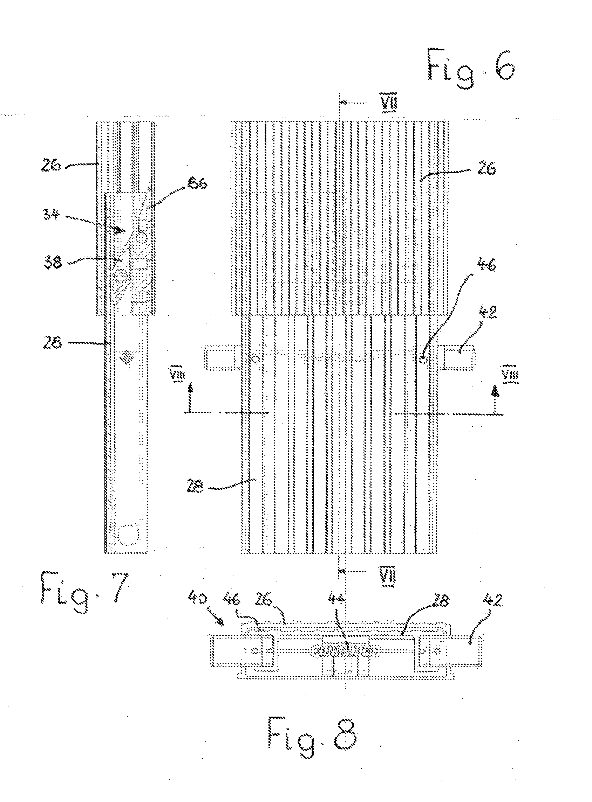

In figure 7 it is illustrated that the extractable section bars 28 of the rear part are provided with buffer elements 34 adapted to stop said section bars 28 in their position of maximum extension in the corresponding floor profile element 26. Each of said buffer elements 34 is made up of a ramp 86 fixed to the corresponding floor profile element 26 and of a notch 38.

It is clear from figures 6 to 8 that the extractable section bars 28 are provided with load distribution means 40 for uniformly distributing the weight acting on the ramp. Said distribution means 40 are constituted, for every second section bar 28, by a pair of svivel fingers 42 interconnected by a spring 44 and rotably mounted on a vertical axis 46 such that, in the moment of extraction, said fingers 42 will turn into their opening position and engage into seats provided in the adjacent section bar 28.

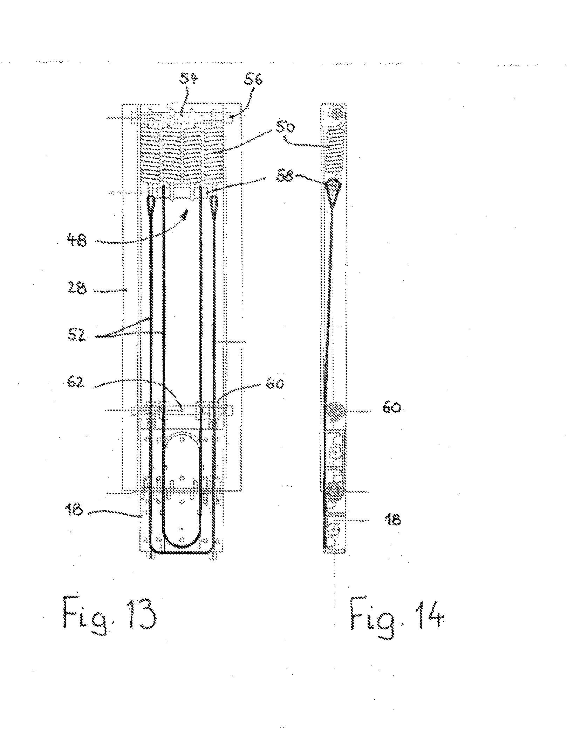

With reference to figures 13 and 14, the hinge joints 18 are provided with a lifting device 48 comprising a system of springs 50 and ropes 52 adapted to ease the weight of the ramp during the lifting phase from the inclined position into the horizontal position.

Said lifting device 48 uses the tension of a pair of steel ropes 52 having section of 3,2 mm. Said ropes 52 are charged with a tensile stress by two pairs of preloading springs 50 which are interconnected at one end through an axis 54 fixed to the extractable section bar 28 by bolts 56. On the other end, one of said two pairs of springs 50 is connected to a rope 52 running in corresponding guides of the hinge joint 18.

The other pair of springs 50 is connected to an axis 58 which is connected through the second rope 52 to the hinge joint 18. Both ropes 52 are running on four pairs of bushings 60 two of which are installed on a steel axis 62 which is fixed by means of bolts to the extractable section bar 28. The other two bushings are directly housed in the hinge joint 18.

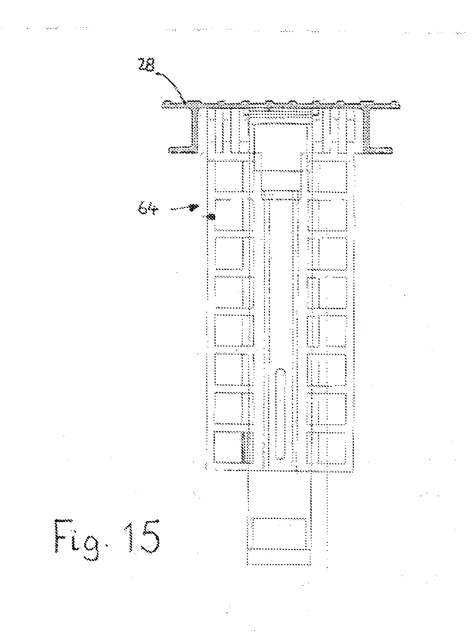

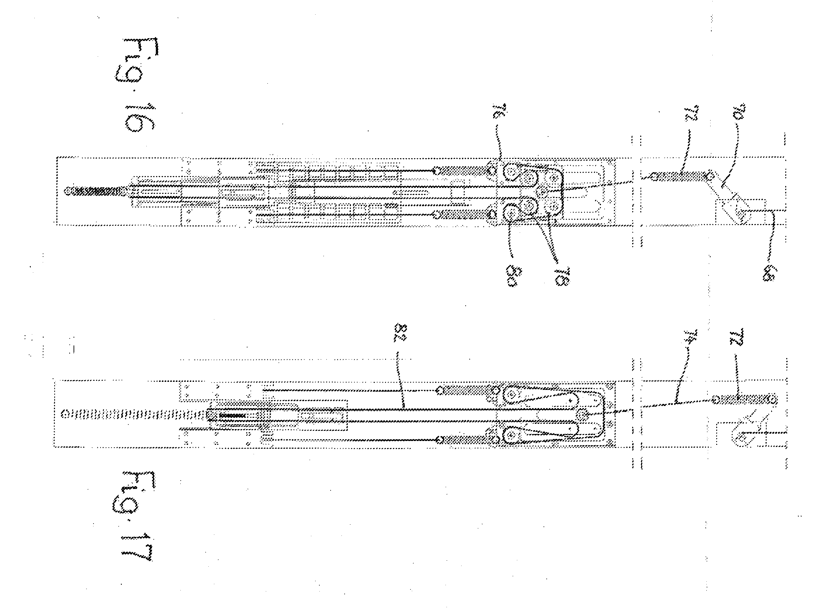

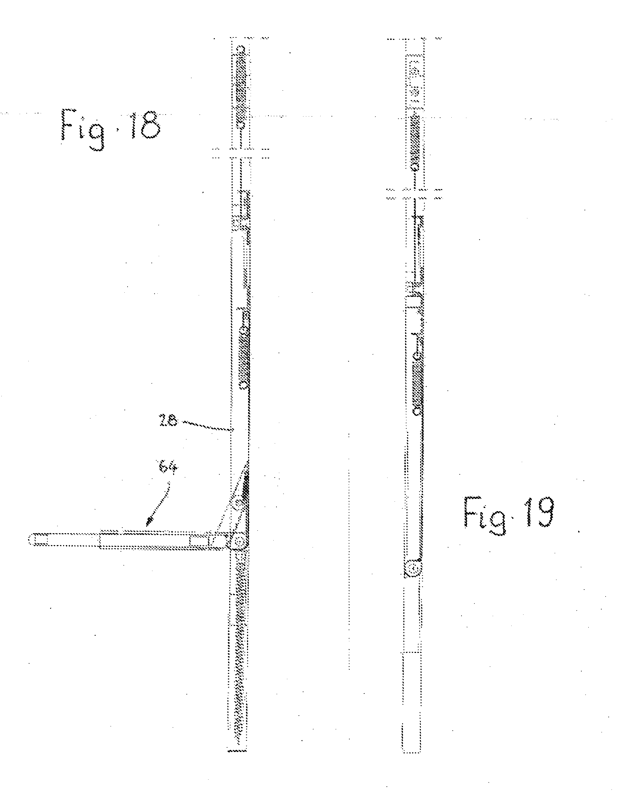

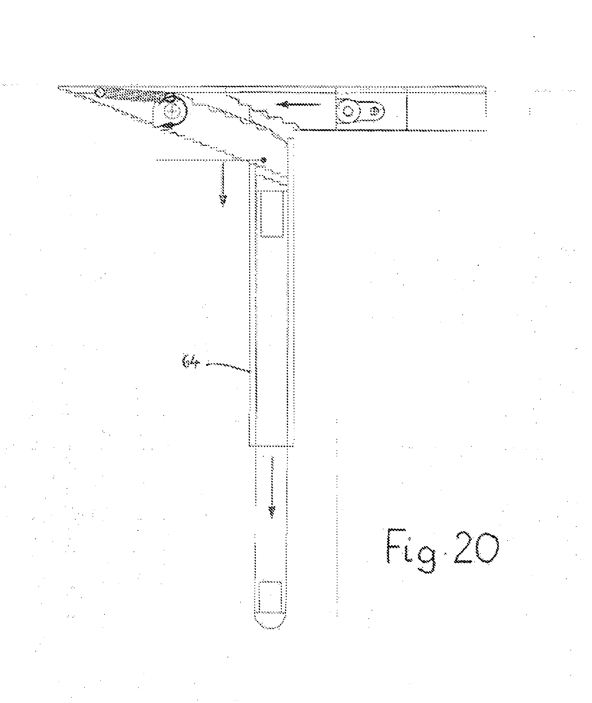

Figures 15 to 20 illustrate that the extractable section bars 28 having the profile of an overturned U are housing a telescopic foot 64 which, in the tilting phase of the front section bars through their hinge joint 18, turn from a hidden position within the section bar 28 (figure 19) into an external supporting position (figures 18 and 20).

The extension length of said telescopic feet 64 may be blocked by means of a thrust lever 66 mounted in the wedge-shaped transversal ramp 36 which is fastened to the leading edge of the front crosshead 30. Said crosshead 30 performs a double action, namely to connect the loading platform with the ground and to act as a telescopic setting mechanism for the feet 64 housed within the extractable section bars 28.

When the front crosshead 30 is abutting the ground 24 or a reference plane, said thrust lever 66 housed in said crosshead stretches a steel cable 68 which is connected to an axis on which a second lever 70 is rotably mounted. Said traction will rotate the bushing through 80°. The lever is housed within the floor profile element 26. One end of said lever 70 is connected to a spring 72 which is coupled through a steel cable 74 to a slide 76. When said lever 70 executes its rotation, it will pull the slide 76 comprising four pulleys 78 and running on the support having two other pulleys 80. Through all of said six pulleys 78, 80 a cable 82 of nylon is running which triples the stroke of said cable. This solution is necessary to enable a toothed wedge-shaped element 84 (figure 20), running together with a guide shoe in which it is housed, to press from both sides against a thoothed lever. Said lever will then be stretched in the predetermined position such that it acts as a locking element for the telescopic foot 64.

## Claims

1. Platform with ramp for small or medium sized lorries (10) for loading or unloading materials or for surmounting a structural barrier, wherein said platform is made up of a series of floor profile elements (26) which are laterally interconnected such that a desired overall width is obtained, each of said profile elements (26) housing an extractable and longitudinally sliding section bar (28), **characterized in that** said series of extractable section bars (28) interconnected by a front crosshead (30) are subdivided into a front series and a rear series of section bars, both series being interconnected by hinge joints (18) having horizontal axes.

2. Platform according to claim 1, wherein the front series of said extractable section bars makes up, in its extracted position, an inclined platform (20).

3. Platform according to claim 1 or 2, wherein at least part of the floor profile elements (26) are closed at their lower side.

4. Platform according to claim 3, wherein the floor profile elements (26) in said series are arranged such that a closed one is alternating with an open one at the bottom.

5. Platform according to any of the preceding claims, wherein the extractable section bars (28) are laterally slidable on guide shoes (32) of synthetic material fastened on vertical walls of said floor profile elements (26).

6. Platform according to any of the preceding claims, wherein a transversal ramp (36) having a wedge-shaped section is fastened to the front edge of said crosshead (30).

7. Platform according to any of the preceding claims, wherein the rear section bars are provided with buffer elements (34) adapted to stop said section bars in their position of maximum extension in the corresponding floor profile element (26).

8. Platform according to any of the preceding claims, wherein said extractable section bars (28) are provided with load distribution means (40) for uniformly distributing the weight acting on the ramp.

9. Platform according to claim 8, wherein said load distribution means (40) are made up, for every second section bar, of a pair of swivel fingers (42) interconnected by a spring (44) and rotably mounted on a vertical axis (46) such that, in the moment of extraction, said fingers (42) will turn into their opening position and engage into seats provided in the adjacent section bar (28).

10. Platform according to any of the preceding claims, wherein said hinge joints (18) are provided with a lifting device (48) comprising a system of springs (50) and ropes (52) adapted to ease the weight of the ramp during the lifting and lowering phase.

11. Platform according to any of the preceding claims, wherein the extractable section bars (28) having the profile on an overturned U are housing a foot (64) which, in the tilting phase of the front section bars through their hinge joints (18), will turn from a hidden position within said section bar into an external supporting position.

12. Platform according to claim 11, wherein said feet are telescopic feet (64).

13. Platform according to claim 12, wherein the extension length of said telescopic feet (64) may be blocked by means of a thrust lever (66) mounted in said wedge-shaped transversal ramp (36) fastened to the leading edge of said front crosshead (30).

## Patentansprüche

1. Plattform mit Rampe an kleinen oder mittelgroßen Lastkraftwagen (10) zum Beladen oder Entladen von Material oder zum Überwinden von konstruktiven Barrieren, wobei die Plattform aus einer Anzahl von Bodenprofilelementen (26) zusammengesetzt ist, die an ihren Seiten so miteinander verbunden sind, dass eine gewünschte Gesamtbreite erzielt wird, und wobei jedes Profilelement (26) eine in Längsrichtung verstellbare, herausziehbare Profilschiene (28) aufnimmt, **dadurch gekennzeichnet , dass** die Gruppe der ausziehbaren Profilschienen (28), die durch einen vorderen Querriegel (30) miteinander verbunden sind, in eine vordere und eine hintere Reihe von Profilschienen unterteilt ist, die beide über Scharniere (18) mit horizontalen Schwenkachsen miteinander gekoppelt sind.

2. Plattform nach Anspruch 1, **dadurch gekennzeichnet, dass** die vordere Reihe der ausziehbaren Profilschienen in ihrer herausgezogenen Position eine schräge Plattform (20) bildet.

3. Plattform nach Anspruch 1 oder 2, **dadurch gekennzeichnet, dass** wenigstens ein Teil der Bodenprofilelemente (26) an ihrer unteren Seite geschlossen ist.

4. Plattform nach Anspruch 3, **dadurch gekennzeichnet, dass** die Bodenprofilelemente (26) in der durch sie gebildeten Einheit so angeordnet sind, dass ein an der unteren Seite geschlossenes Element mit einem unten offenen Element abwechselt.

5. Plattform nach einem der vorhergehenden Ansprüche, **dadurch gekennzeichnet, dass** die ausziehbaren Profilschienen (28) seitlich auf Führungsbacken (32) aus Kunststoff gleiten, welche an vertikalen Wänden der Bodenprofilelemente (26) befestigt sind.

6. Plattform nach einem der vorhergehenden Ansprüche, **dadurch gekennzeichnet, dass** an dem vorderen Querriegel (30) ein keilförmiger Rampenabschnitt (36) befestigt ist.

7. Plattform nach einem der vorhergehenden Ansprüche, **dadurch gekennzeichnet, dass** die hintere Reihe der Profilschienen (28) Anschlagelemente (34) zum Begrenzen des Verschiebeweges der Profilschienen (28) in der maximalen Auszugsstellung innerhalb des zugehörigen Bodenprofilelementes (26) haben.

8. Plattform nach einem der vorhergehenden Ansprüche, **dadurch gekennzeichnet, dass** die ausziehbaren Profilschienen (28) Lastverteilmittel (40) haben, welche die auf die Rampe wirkenden Gewichtskräfte gleichmäßig auf diese aufteilen.

9. Plattform nach Anspruch 8, **dadurch gekennzeichnet, dass** die Lastverteilmittel (40) in jeder zweiten Profilschiene (28) aus einem Paar von Schwenkfingern (42) bestehen, die über eine Feder (44) miteinander verbunden und um eine vertikale Achse (46) schwenkbar gelagert sind derart, dass im Augenblick des Herausziehens die Finger (42) in ihre Öffnungsstellung gelangen und in entsprechende Sitze in der benachbarten Profilschiene (28) eingreifen.

10. Plattform nach einem der vorhergehenden Ansprüche, **dadurch gekennzeichnet, dass** die Scharniere (18) eine Hubeinrichtung (48) mit Federsystem (50) und Seilen (52) zur Gewichtsreduzierung der Rampe während des Anhebens und Absenkens aufweisen.

11. Plattform nach einem der vorhergehenden Ansprüche, **dadurch gekennzeichnet, dass** die ausziehbare Profilschienen (28) mit dem Querschnitt eines kopfstehenden U einen Fuß (64) aufnehmen, der in der Schwenkphase der vorderen Profilschienen um ihre Scharniere (18) aus einer verborgenen Stellung innerhalb der Profilschiene (28) in eine nach außen gekehrte Stützstellung schwenkt.

12. Plattform nach Anspruch 11, **dadurch gekennzeichnet, dass** Füße aus Teleskopfüßen (64) bestehen.

13. Plattform nach Anspruch 12, **dadurch gekennzeichnet, dass** die Auszugslänge der Teleskopfüße (64) mittels eines Stützhebels (66) blockierbar ist, der in dem keilförmigen Rampenabschnitt (36) gelagert ist, welcher an der Vorderkante des vorderen Querriegels (30) befestigt ist.

## Revendications

1. Plate-forme avec rampe sur des petits ou moyens camions (10) pour charger ou décharger des matériaux ou pour surmonter des barrières, ladite plate-forme étant composée d'un nombre d'éléments profilés de sol (26) reliés latéralement pour obtenir une largeur totale désirée, chaque élément profilé contenant un rail profilé (28) étirable et réglable dans le sens de la longueur, **caractérisée par le fait que** le groupe des rails extensibles (28), frontalement reliés par une barre transversale (30), est divisé en une rangée antérieure et une rangée postérieure de rails profilés (28) reliées entre elles par des charnières (18) à axes horizontaux.

2. Plate-forme selon la revendication 1 **caractérisée par le fait que** la rangée antérieure des rails profilés extensibles (28) forme dans sa position étirée une plate-forme inclinée (20).

3. Plate-forme selon la revendication 1 ou 2 **caractérisée par le fait qu'**au moins une partie des éléments profilés de sol (26) est fermée dans sa partie inférieure.

4. Plate-forme selon la revendication 3 **caractérisée par le fait que** les éléments profilés de sol (26) sont arrangés d'une manière qu'un élément inférieurement fermé alterne avec un élément inférieurement ouvert.

5. Plate-forme selon une des revendications précédentes **caractérisée par le fait que** les rails profilés extensibles (28) sont guidés latéralement sur des patins de glissement (32) en plastique fixés à des parois verticales des éléments profilés de sol (26).

6. Plate-forme selon une des revendications précédentes **caractérisée par le fait que** sur la barre transversale antérieure (30) est fixée une partie de rampe cunéiforme (36).

7. Plate-forme selon une des revendications précédentes **caractérisée par le fait que** dans la rangée postérieure des rails profilés (28) lesdits rails sont munis d'éléments d'arrêt (34) pour limiter la course des rails profilés (28) dans une positon d'extension maximale à l'intérieur des éléments profilés de sol (26) correspondants.

8. Plate-forme selon une des revendications précédentes **caractérisée par le fait que** les rails profilés extensible (28) sont munis de moyens de répartition de charge (40) pour égaliser les charges supportées par la rampe.

9. Plate-forme selon la revendication 8 **caractérisée par le fait que** les moyens de répartition de charge (40) sont constitués par une paire de doigts (42) montés dans un rail profilé (28) sur deux, lesdits doigts étant reliés par un ressort (44) et pivotant sur un axe vertical (46) de sorte que, au moment de l'extension, lesdits doigts (42) se mettent en position d'ouverture pour s'insérer dans les sièges correspondants du rail voisin (28).

10. Plate-forme selon une des revendications précédentes **caractérisée par le fait que** les charnières (18) sont munies d'un dispositif de soulèvement (48) avec un système à ressort (50) et à câble (52) pour réduire le poids de la rampe pendant son soulèvement et son abaissement.

11. Plate-forme selon une des revendications précédentes **caractérisée par le fait que** les rails profilés (28) en U renversé logent chacun un pied (64) qui, pendant la phase de pivotement des rails profilés antérieurs (28) autour de leurs charnières (28), se rabatte de sa position rentrée en une position externe de support.

12. Plate-forme selon la revendication 11 **caractérisée par le fait que** les pieds sont des pieds télescopiques (64).

13. Plate-forme selon la revendication 12 **caractérisée par le fait que** la longueur d'extension des pieds télescopiques (64) se bloque par un levier d'appui (66) monté dans la partie cunéiforme (36) fixée sur le bord arrière de la barre transversale (30).
